(19) Europäisches Patentamt
European Patent Office
Office européen des brevets

(11) **EP 1 710 420 B1**

(12) **EUROPEAN PATENT SPECIFICATION**

(45) Date of publication and mention
of the grant of the patent:
**16.04.2008 Bulletin 2008/16**

(51) Int Cl.:
*F02D 41/00* (2006.01)    *G05B 11/42* (2006.01)
*G05B 13/04* (2006.01)

(21) Application number: **06110475.8**

(22) Date of filing: **28.02.2006**

(54) **Control apparatus for internal combustion engine**

Vorrichtung zur Regelung einer Brennkraftmaschine

Dispositif de commande d'un moteur à combustion interne

(84) Designated Contracting States:
**DE FR GB**

(30) Priority: **28.03.2005 JP 2005091651**

(43) Date of publication of application:
**11.10.2006 Bulletin 2006/41**

(73) Proprietors:
• **Daihatsu Motor Co., Ltd.**
**Ikeda-shi, Osaka 563-8651 (JP)**
• **Toyota Jidosha Kabushiki Kaisha**
**Toyota-shi, Aichi-ken, 471-8571 (JP)**

(72) Inventors:
• **Sagimori, Kenji**
**Ikeda-shi,**
**Osaka 563-8651 (JP)**
• **Asano, Morito**
**Ikeda-shi,**
**Osaka 563-8651 (JP)**
• **Niwa, Shinji**
**Ikeda-shi,**
**Osaka 563-8651 (JP)**
• **Kajitani, Mitsunobu**
**Ikeda-shi,**
**Osaka 563-8651 (JP)**
• **Itatsu, Toshiro**
**Toyota-shi, Aichi-ken,**
**Aichi 471-8571 (JP)**

• **Kinuhata, Hiroki**
**Toyota-shi, Aichi-ken,**
**Aichi 471-8571 (JP)**

(74) Representative: **TBK-Patent**
**Bavariaring 4-6**
**80336 München (DE)**

(56) References cited:
**DE-A1- 4 100 064        DE-A1- 19 846 447**
**US-A- 4 219 000        US-A- 5 614 801**

• **PATENT ABSTRACTS OF JAPAN vol. 1997, no. 10, 31 October 1997 (1997-10-31) & JP 09 160603 A (TOSHIBA CORP), 20 June 1997 (1997-06-20)**
• **PATENT ABSTRACTS OF JAPAN vol. 2000, no. 25, 12 April 2001 (2001-04-12) & JP 2001 214731 A (MAZDA MOTOR CORP), 10 August 2001 (2001-08-10)**
• **PATENT ABSTRACTS OF JAPAN vol. 2000, no. 13, 5 February 2001 (2001-02-05) & JP 2000 291493 A (TOYOTA MOTOR CORP), 17 October 2000 (2000-10-17)**
• **PATENT ABSTRACTS OF JAPAN vol. 1999, no. 02, 26 February 1999 (1999-02-26) & JP 10 299580 A (UNISIA JECS CORP), 10 November 1998 (1998-11-10)**

**Description**

The present invention relates to a control unit for an internal combustion engine on board a vehicle, for example.

2. Description of the Related Art

Conventionally, as the internal combustion engine on board a vehicle, for example, the one equipped with an exhaust gas recirculation apparatus (EGR control unit) is well known. The exhaust gas recirculation apparatus recirculates part of exhaust gas to mix with intake air in order to reduce the quantity of NOx in the exhaust gas. The exhaust gas recircirculation apparatus includes an exhaust gas recircirculation control valve (EGR control valve) for adjusting the quantity of exhaust gas recirculation which is provided in an exhaust gas recirculation passage for recirculating part of exhaust gas from the exhaust gas passage into an intake air passage and adjusts the quantity of the exhaust gas to be mixed with the intake air by adjusting the degree of opening of the EGR control valve by feedback control and PID control. In order to execute feedback control and PID control, such an exhaust gas recirculation apparatus has exhaust gas pressure map shown in the patent document 2, proportional gain map, respective maps about basic EGR control valve control quantity and charging pressure correction EGR control valve control quantity, and values for coolant temperature correction for correction relating to operation environment, atmospheric pressure correction and intake air temperature correction and their correction coefficients are set up according to a variety of maps and tables.

It is referred to prior art document JP 10-299580, document JP 2000-291493 and document JP 2001-214731.

However, the apparatus having such a structure needs at least the above-described plural maps in order to set up a control quantity of the exhaust gas recirculation control valve. Additionally, for each of the necessary maps, its correction value and correction coefficient need to be set up corresponding to the operating condition of the internal combustion engine. That is, the operating condition cannot be reflected upon a control value for controlling the exhaust gas recirculation control valve unless each map is set for each operating condition to, for example, low load low rotation operating condition or medium load high rotation operating condition. Furthermore, it is necessary to create a map corresponding to the operating condition divided into small sections in order to raise the control accuracy of the exhaust gas recirculation control valve or recirculation ratio. If each map is created corresponding to each of such divided operating conditions in the above-described fashion, it takes a number of steps to create individual maps so that it requires a number of time to complete all the maps.

Moreover, prior art, document US-A-4 219 000 discloses a control device for select speeds in an internal combustion engine, wherein selected speeds can be maintained as a constant value. An integral controller is provided specifically for idling control where the control concept does not interfere during regular driving operation. The engine operating conditions are detected by various sensors. When the detected speed of the engine is outside a selected speed range, the integral controller is switched out of its operative state, and the final control state is maintained intact whenever the integrator is switched out of its operative state. Specifically, outside the selected speed range, and in particular at higher speeds of normal operation of the internal combustion engine, another control concept is applicable, and the integral controller again takes up control responsibility when the speed of the engine again enters the control speed range.

Furthermore, prior art document DE 198 46 447 A1 discloses a control unit having a control concept for controlling a segment with several coupled controlled variables, wherein two controllers each having two control variables are provided. The control path includes a decoupling unit wherein a first correction value is provided and fed to one of the controller. A second decoupling unit similarly provides a correction value for the other controller. The first controller has a PID control concept arranged so that an integrator wind-up is avoided if the corrected output value corrected with the first correction value of the decoupling unit reaches the control variable limit. The controller can be used for systems with plural control parameters.

The present invention has been achieved in view of the foregoing, and it is the object of the present invention to solve the above-described inconvenience.

According to the present invention this object is accomplished by a control apparatus for an internal combustion engine as set out in the appended claims.

The present invention is a control apparatus for internal combustion engine for controlling components of the internal combustion engine as a control object using mathematical model of control object system including the components, comprising: integrating means for integrating a deviation obtained by subtracting a control result value as a result of controlling a component with a control value from a control object value relating to control of the component, and control value control means that controls the control value of the component based on an integration value from the integrating means and quantity of state obtained from the mathematical model, wherein the integrating means interrupts integration of the deviation if the control value of the component is an upper limit value and above or a lower limit value and below and if the control object value relating to control of the component changes while the integration is interrupted and the deviation turns to a negative value while the control value of the component is kept the upper limit value and above or the deviation turns to a positive value while the control value of the component is kept the lower limit value and below, the integration is restarted from an integration value at the time of the interruption.

As the component of the internal combustion engine, an ISC valve provided in a bypass passage which bypasses a throttle valve of the intake system for controlling an idle speed, an exhaust gas recirculation control valve for adjusting an exhaust gas recirculation amount provided in the exhaust gas recirculation passage that recirculates part of exhaust gas from the exhaust system to the intake system and the like can be mentioned.

When controlling the component, the control object value relating to the control of the component includes a direct or indirect object value with respect to the component. That is, the direct object value includes a value having the same unit as the control value such as a drive signal for controlling the component and the indirect control object value includes a value having the same unit as the recirculation amount of the exhaust gas or the idle speed, which changes as a result of controlling the component.

With such a structure, the control value control means controls the control value of the component of the internal combustion engine without using any map or table whose variable is set for control, based on an integration value of a deviation indicating a difference between the quantity of state obtained from the mathematical model of a control object system and a control result value from the control object value relating to the control of the component. Then, the integrating means interrupts integration of the deviation if the control value is the upper limit value and above or the lower limit value and below and if the control object value relating to the control of the component changes while the integration is interrupted and deviation turns to a negative value while the control value of the component is kept the upper limit value and above or the deviation turns to a positive value while the control value of the component is kept the lower limit value and below, restarts the integration from an integration value at the time of the interruption. As a consequence, when the control object value relating to the control of the component changes, the integration value can be reflected upon the control value of the component without any delay. Further, because the control value of the component is controlled based on the quantity of state of the mathematical model, the control value does not need to be set up preliminarily according to a map or table corresponding to the operating condition thereby reducing the number of steps for adaptation largely.

To improve the control accuracy, preferably, the control value control means comprises: a stabilizing portion that controls the control value of the component so that an assessment function of the quantity of state obtained from the mathematical model is minimized; an object value optimizing portion that controls the control value of the component by optimizing the control object value relating to control of the component based on a transmission function of the mathematical model; a follow-up delay offsetting portion that controls the control value of the component according to a follow-up delay value based on the quantity of state of the mathematical model for offsetting an integration value from the integrating means; and a modeling error offsetting portion that controls the control value according to a modeling error offsetting value obtained by minimizing the assessment function based on a deviation between the follow-up delay value from the follow-up delay offsetting portion and the integration value. By constructing the control value control means in this way, the follow-up performance of the control result value to the control object value can be improved.

To absorb a modeling error which cannot be modeled in the mathematical model, preferably, the control value control means further comprises an observer that estimates the control amount of the component from the quantity of state obtained from the mathematical model and feeds back an estimated control amount to the stabilizing portion and the follow-up delay offsetting portion.

As a specific composition for controlling the integrating means, it is possible to pick up comparing means that compares the set upper limit value and lower limit value with the control value of the component, and if the control value turns the upper limit value and above or the lower limit value and below, makes the integrating means to interrupt integration and if the control object value relating to control of the component changes while the integration is interrupted so that the deviation turns to be a negative value while the control value of the component is kept the upper limit value and above or the deviation turns to a positive value while the control value of the component is kept the lower limit value and below, makes the integrating means to restart the integration from an integration value at the time of the interruption.

In the above-described structure, more specifically, the component is a recirculation control valve provided in an exhaust gas recirculation pipe that communicates exhaust system with intake system and the control result value is exhaust gas recirculation ratio. If the component is a recirculation control valve of exhaust gas, the response by the exhaust gas recirculation control can be improved and further the combustion efficiency of the internal combustion engine can be improved.

The present invention is carried out in the above-described fashion and following effects are exerted.

According to the control method of the internal combustion engine of the present invention, if the control value of the component is the upper limit value and above or the lower limit value and below, the integration of the deviation is interrupted and if the control object value relating to the control of the component changes, the integration value can be reflected upon the control value without any delay by restarting the integration from an integration value at the time of the interruption.

Because the control value of the component is controlled based on the quantity of state of the mathematical model, any correction value for correcting the control value does not need to be set up preliminarily according to a map or table corresponding to the operating condition thereby reducing the number of steps for adaptation largely.

BRIEF DESCRIPTION OF THE DRAWINGS

FIG. 1 is a structure explanatory diagram showing the schematic structure of the embodiment of the present invention.
FIG. 2 is a block diagram for explaining the function of a control unit of the same embodiment.
FIG. 3 is a flow chart showing control steps of the embodiment.

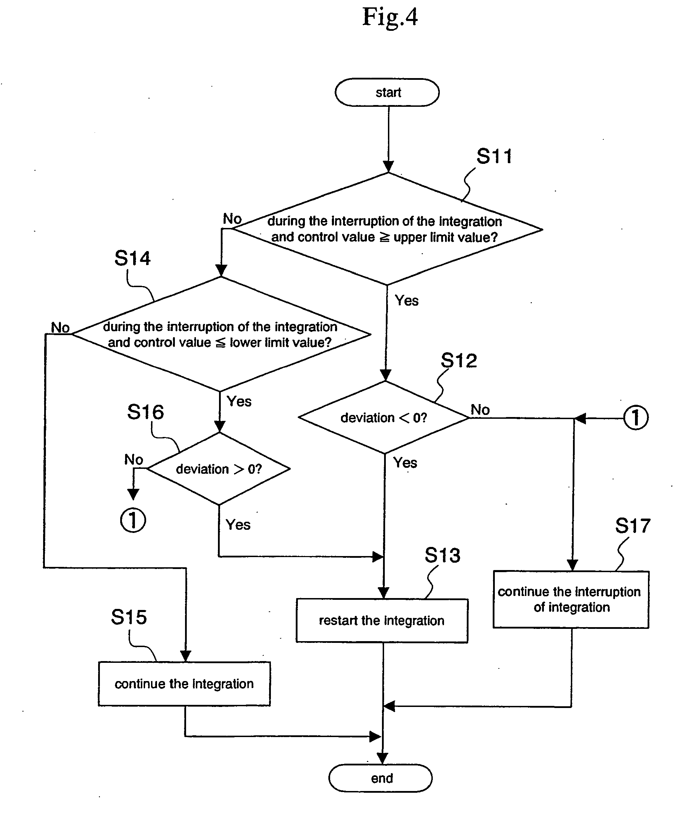

FIG. 4 is a flow chart showing control steps of the embodiment.
FIG. 5 is an operation explanatory diagram of the embodiment.

DETAILED DESCRIPTION OF THE INVENTION

Hereinafter, the embodiment of the present invention will be described with reference to the accompanying drawings.

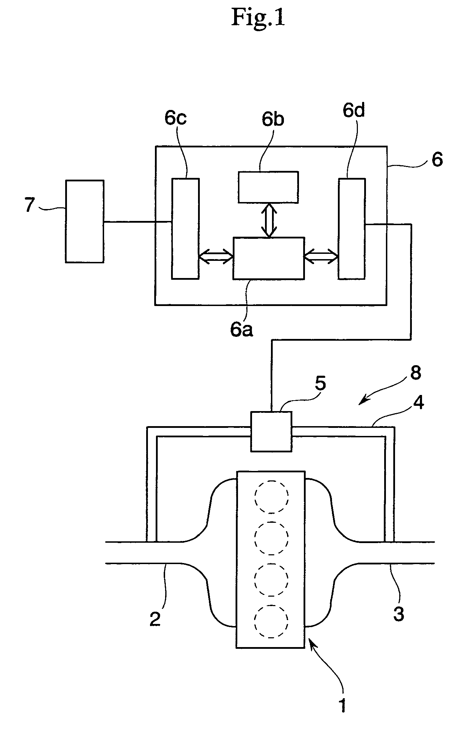

An engine 1 shown schematically in FIG. 1 is of multi-cylinder, for example, four-cylinder fuel injection type for automobile, which includes an intake system 2 for introducing intake air into each cylinder and an exhaust system 3 for introducing combustion gas or unbunt gas in each cylinder outside. This engine 1 includes an exhaust gas recirculating passage 4 which communicates with the intake system 2 and the exhaust system 3 selectively in order to mix a predetermined quantity of exhaust gas with the intake air. This exhaust gas recirculation passage 4 is provided with an exhaust gas recirculation valve 5 which is a control element for controlling the flow quantity of exhaust gas recirculated to the intake system 2, that is, the exhaust gas recirculation quantity. This engine 1 is for example, of fuel injection type, in which a basic quantity of fuel injection amount is set up based on an intake port pressure and engine speed, the basic quantity is corrected depending on an engine temperature (engine coolant temperature) or a requirement amount and further depending on an air-fuel ratio detected based on the concentration of oxygen in the exhaust gas and a fuel injection amount is set up based on the corrected basic quantity of fuel injection.

In this exhaust gas recirculation control valve 5, its opening degree is controlled by controlling a duty ratio of a drive voltage, for example. Then, part of exhaust gas is recirculated to the intake system 2 by controlling the opening degree of this exhaust gas recirculation control valve 5. The recirculation of exhaust gas is stopped when the engine 1 is cranked, the engine speed is lower than a predetermined speed or the coolant temperature of the engine 1 is excessively high or low.

The control unit 6 for controlling the operating condition of the engine including the exhaust gas recirculation control valve 5 is constituted of mainly a microcomputer system comprising a microprocessor 6a for executing a variety of control programs described later, a memory 6b which stores a control program and memorizes a variety of data necessary for executing the control program, an input interface 6c which receives a signal from a variety of sensors 7 (shown in a lump in FIG. 1) for detecting operating conditions of the engine 1 and an output interface 6d which outputs signals to a fuel injection valve for injecting fuel, an ignition plug and so on. This control unit has a structure for detecting intake port pressure, exhaust gas pressure, engine speed, engine temperature (coolant temperature), intake air/exhaust gas temperature, air-fuel ratio in exhaust gas and the like with corresponding sensors 7 in order to control the operating conditions of the engine 1. This structure may be adopted from well known structures in an appropriate field. Additionally, this control unit 6 outputs a drive signal of a control value corresponding to an opening degree generated in a way described below to the exhaust gas recirculation control valve 5 from the output interface 6d.

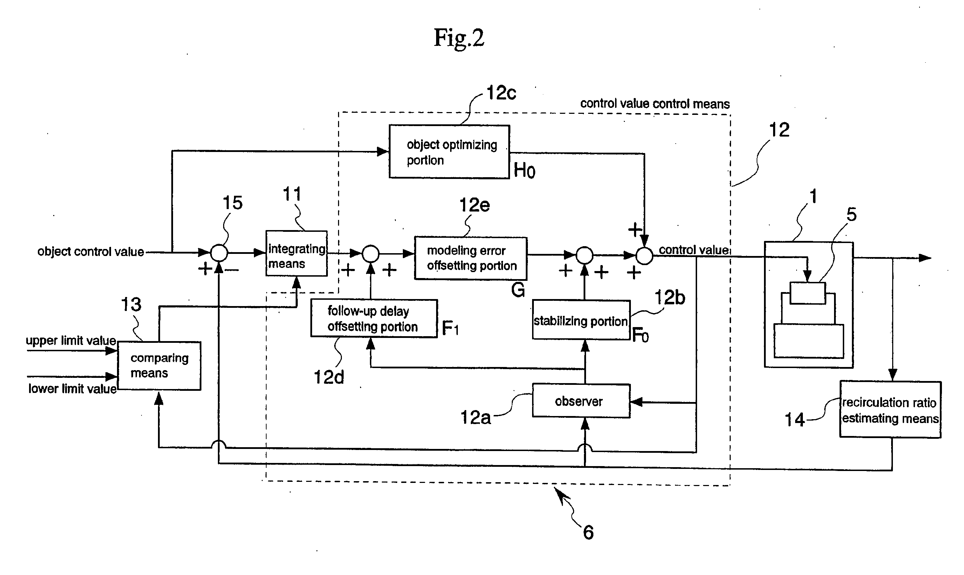

The control unit 6 executes the fuel control program for controlling fuel injection quantity and a control program including a mathematical model of exhaust gas recirculation passage system 8 which is a control object having the exhaust gas recirculation control valve 5 in order to control the exhaust gas recirculation control valve 5. The control program for exhaust gas recirculation control makes the control unit 1 function as an integrating means 11, control value control means 12, comparing means 13 and recirculation ratio estimating means 14 (shown in FIG. 2) when it is executed. In the meantime, before the exhaust gas recirculation control valve 5 is controlled, its control object value is set up preliminarily. This control object value corresponds to an exhaust gas recirculation ratio which is a control result value which changes as a result of controlling the an exhaust gas flow amount when the flow amount of exhaust gas recirculating to the intake system 2 is controlled by controlling the exhaust gas recirculation control valve 5. That is, the control object value concerns controlling of the exhaust gas recirculation control valve 5 and is not a control object value which specifies the opening degree of the exhaust gas recirculation control valve 5 directly but sets up an opening degree of the exhaust gas recirculation control valve 5 in correspondence with a recirculation ratio of exhaust gas which changes as a result of controlling the opening degree of the exhaust gas recirculation control valve 5.

The mathematical model expresses knowledge about the exhaust gas recirculation passage system 8 in a specified form corresponding to control theory and is created by identification experiment. The identification experiment is carried out by driving the exhaust gas recirculation control valve 5 with a duty signal composed of binary signal (M system) comprising a variety of frequency components as a control signal for the exhaust gas recirculation control valve 5 and using that control signal as an input signal for a control system to be identified, namely, exhaust gas recirculation passage system 8 while using an exhaust gas recirculation ratio which is a control result obtained by observation as an output signal of the control system. Then, the control unit 6 is made to function as the control value control means 12 based on state equation and output equation (equations (1) and (2)) of the mathematical model obtained by the identification experiment. When the mathematical model is created, a portion capable of estimating a linear change of operating condition in a frequently used operating region of the engine 1 is used.

$$\dot{X} = AX + Bu \qquad\qquad (1)$$

$$y = C \cdot X \qquad\qquad (2)$$

where the aforementioned X is a quantity of state, u is input signal, y is output signal (control value) and A, B, C are coefficients obtained by identification experiment.

The functions of the integrating means 11, the control value control means 12, the comparing means 13 and the recirculation ratio estimating means 14 in the control unit 1 will be described.

The integrating means 11 integrates a deviation obtained by subtracting a recirculation ratio of exhaust gas estimated depending on the operating condition of the engine 1 from a control object value by an adder-subtractor 15. This integrating means 11 interrupts integration of deviation according to an instruction from the comparing means 13 described later when the control value of the exhaust gas recirculation control valve 5 is an upper limit value and above and a lower limit value and below, and when the control object value changes in this period, starts the integration from an integration value when it is interrupted. When the integration is interrupted, the integrating means 11 is programmed so as to hold its final integration value, and to restart the integration from the finale integration value held when the integration is restarted by changing the control object value. In this case, the integration means 11 is so constructed if the control object value relating to control of the exhaust gas recirculation control valve 5 changes while the integration is interrupted and the deviation turns to a negative value while the control value of the exhaust gas recirculation control valve 5 is kept the upper limit value and above or the deviation turns to a positive value while the control value of the exhaust gas recirculation control valve 5 is kept the lower limit value and below, the integration is restarted from the integration value at the time of the interruption.

The control value control means 12 which controls a control value of the exhaust gas recirculation control valve 5 controls the control value of the exhaust gas recirculation control valve 5 based on the quantity of state obtained from the mathematical model by executing a control program and an integration value from the integrating means 11 so as to control the recirculation ratio of exhaust gas. The control value control means 12 comprises an observer 12a, a stabilizing portion 12b, an object value optimizing portion 12c, a follow-up delay offsetting portion 12d and a modeling error offsetting portion 122e, estimates the quantity of state according to the mathematical model and controls the control value of the exhaust gas recirculation control valve 5 stably with little error.

More specifically, the observer 12a estimates a control amount of the exhaust gas recirculation control valve 5 from the quantity of state obtained from the mathematical model and feeds back an estimated control amount to the stabilizing portion 12b and the follow-up delay offsetting portion 12d. This observer 12a estimates a modeling error, which cannot be modeled according to the mathematical model obtained by identification, and disturbance of parameter variation as part of the exhaust gas recirculation passage system 8 and absorbs that estimated disturbance by offsetting it by controlled processing.

The stabilizing portion 12b feeds back the quantity of state estimated by the observer 12a and computes a feedback gain $F_0$ (equation (4)) of the quantity of state by minimizing an assessment function of an equation (3) which is a sum of squares of the fed back quantity of state and a control value of the exhaust gas recirculation control valve 5 so as to correct the control value of the exhaust gas recirculation control valve 5.

$$j = \int (X \cdot Q \cdot X^t + u \cdot R \cdot u^t)\, dt \qquad\qquad (3)$$

$$F_0 = R^{-1} \cdot B \cdot P \qquad (4)$$

where Q and R are weights of the quantity of state X and control value and P is a solution of the following Riccati equation.

$$P \cdot A + A^T \cdot P - P \cdot B \cdot R^{-1} \cdot B^T \cdot P + Q = 0$$

The object optimizing portion 12c sets up feed-forward item $H_0$ such that gain is 1 when the frequency of the equation (5) is 0 by multiplying a transmission function (equation (5)) obtained by Laplace-transforming the state equation with a gain which optimizes the control object value, namely, the feed-forward item $H_0$ (equation (6)).

$$H_0 \cdot C (s \cdot I - A - B \cdot F_0)^{-1} B \cdot F_0 \qquad (5)$$

$$H_0 = [ -C \cdot (A + B \cdot F_0)^{-1} ]^{-1} \qquad (6)$$

The follow-up delay offsetting portion 12d can express a deviation between the control object value and the control value of the exhaust gas recirculation control valve 5 in an equation (7) using the quantity of state X when it is assumed that there is no modeling error, and sets up a follow-up delay value F1 so that the integration value from this follow-up delay offsetting portion 12d offsets an integration value from the integrating means 11.

$$F_1 = -C \cdot (A + B \cdot F_0)^{-1} \cdot X \qquad (7)$$

The modeling error offsetting portion 12e sets up a modeling error offsetting value by minimizing the aforementioned assessment function obtained based on a deviation between a follow-up delay value from the follow-up delay offsetting portion 12d and a final convergence value of the integration value. This modeling error offsetting portion 12e sets up a feedback gain G according to an equation (8) in order to obtain the modeling error offsetting value.

$$G = -R^{-1} \cdot (C \cdot (A + B \cdot F_0) \cdot B)^T \cdot W \qquad (8)$$

where W is a weight.

The comparing means 13 compares a set upper limit value and the lower limit value with a control value of the exhaust gas recirculation control valve 5. If the control value is the upper limit value and above or the lower limit value and below as a result of comparison, the comparing means 13 makes the integrating means 11 interrupt integration. If the control object value relating to control of the exhaust gas recirculation control valve 5 changes while the integration is interrupted, so that the deviation turns to a negative value when the control value of the exhaust gas recirculation control valve 5 is kept the upper limit value and above or the deviation turns to a positive value when the control value of the exhaust gas recirculation control valve 5 is kept the lower limit value and below, the comparing means 13 makes the integrating means 11 to restart integration from an integration value gained when the integration is interrupted. The upper limit value is set to a value in such a state in which the exhaust gas recirculation control valve 5 is opened 100% when the recirculation ratio corresponding to the opening degree of the exhaust gas recirculation control valve 5 reaches the control object value and the lower limit value is set to a value in such a state in which the exhaust gas recirculation control valve 5 is closed and its opening degree is 0%.

The recirculation ratio estimating means 14 estimates a recirculation ratio of exhaust gas based on an intake air amount calculated based on an intake port pressure, a diameter of the exhaust pipe, exhaust gas flow amount calculated based on exhaust air amount per cylinder and engine speed, intake air temperature and exhaust gas temperature.

The control value control means 12 functions as a control system for two-degree-of-freedom minimum control including the integrating means 11 to control a control value of the exhaust gas recirculation control valve 5 based on an integration value from the integrating means 11 and the quantity of state obtained from the mathematical model. Then, no map or table for correcting the control value is necessary upon controlling the control value, thereby eliminating the necessity of a time taken for adaptation for a constant value in such a map.

If the engine 1 is started under such a structure, the control program is executed repeatedly every predetermined time, so that first, a control object value is set up in the control unit 6 depending on an operating condition at that time. The operating condition of the engine 1 is detected based on an intake port pressure, engine speed, and engine temperature (engine coolant temperature and the like). The exhaust gas recirculation control valve 5 is kept closed until the temperature of the engine 1, more specifically the coolant temperature rises above a predetermined temperature. Then, if the coolant temperature rises above the predetermined temperature, the control object value is set to a value which is inclined to open the exhaust gas recirculation control valve 5 in order to adjust the recirculation amount of exhaust gas to an optimum amount. For example, if warm-up is completed so that the air-fuel ratio is controlled to be in the vicinity of theoretical air-fuel ratio, the control object value is set to a maximum value so that the discharge amount of NOx (nitrogen oxide) is reduced.

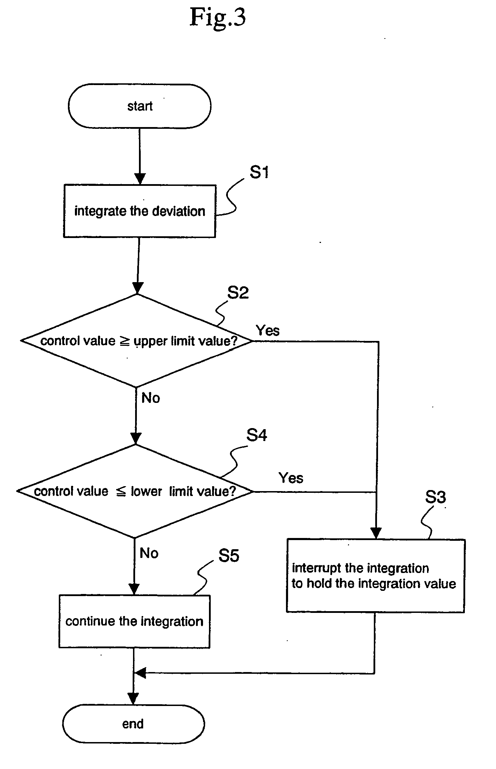

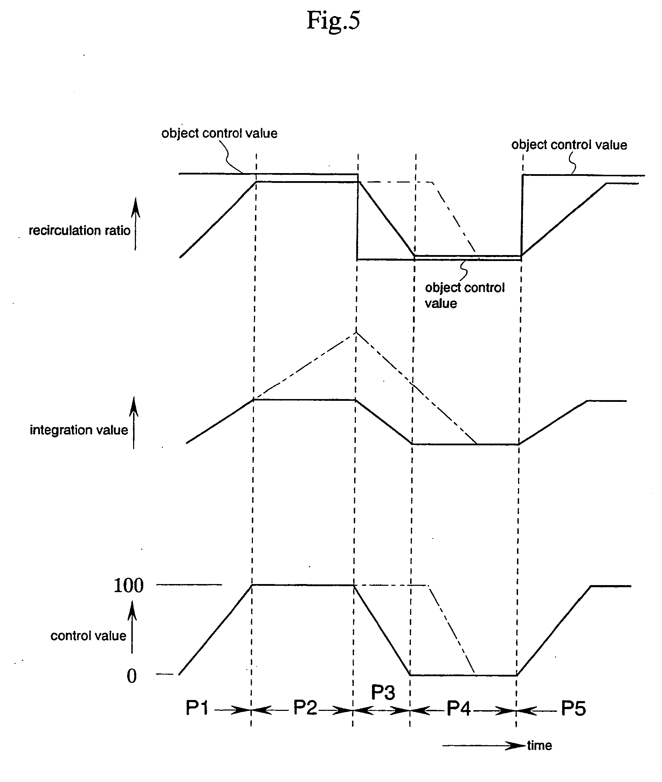

Operations for interruption and restart of the integration of the integrating means 11 will be described with reference to FIGS. 3, 5.

The recirculation ratio of exhaust gas is estimated by the recirculation ratio estimating means 14 after the control object value is set up and the recirculation ratio is substantially 0 when the exhaust gas recirculation control valve 5 is closed after starting. In this case, if the control object value is set to a maximum value, when a recirculation ratio is subtracted from the control object value, its deviation turns to a positive value. That is, the control object value and the recirculation ratio are inputted to the adder-subtractor 15 so that addition or subtraction occurs and its operation result is inputted to the integrating means 11. Even if the integration interruption condition or the control value of the exhaust gas recirculation control valve 5 is the lower limit value and below, the integrating means 11 integrates deviations inputted because the deviation is a positive value, that is, the control object value exceeds the recirculation ratio (step S1). In this case, because the deviation is a positive value, the integration value increases with a passage of time even in a period P1 of FIG. 5 and the control value increases correspondingly, and as the control value increases so that the opening degree of the exhaust gas recirculation control valve 5 increases, the recirculation ratio is increased also.

If the integrating means 11 starts integration, the control value control means 12 is actuated so that the quantity of state X is calculated by the mathematical model and the control value of the exhaust gas recirculation control valve 5 is set up. In this case, because the control value does not retrieve any map set corresponding to an operating condition, the control value can be set up rapidly. Further, the control object value is optimized by the object value optimizing portion 12c and the stability of the mathematical model is raised by stabilizing the quantity of state X in the mathematical model by the stabilizing portion 12b. Further, because the quantity of state X is fed back by the follow-up delay offsetting portion 12d to offset an influence of the follow-up delay and a modeling error is compensated by the modeling error offsetting portion 12e so as to absorb a modeling error and parameter variation which cannot be described upon modeling by the observer 12a, the modeling accuracy of the mathematical model is high so that the operation accuracy of the quantity of state X can be improved. Further, because the operating condition is estimated using the quantity of state X based on the mathematical model, an increase of NOx can be suppressed effectively.

Then, the control is proceeded so as to determine whether or not the control value of the exhaust gas recirculation control valve 5 is the upper limit value and above (step S2) . This determination is a function of the comparing means 13. If the control value is the upper limit value and above, the comparing means 13 interrupts the integration operation of the integrating means 11 (step S3). The integrating means 11 stops integration of deviations with a final integration value held at that time when it receives an instruction of interruption of the integration (period P2 of FIG. 5). When the integration is interrupted, the control value is held at a value at the time of the interruption so that the exhaust gas recirculation control valve 5 keeps a fully open state and thus, the recirculation ratio is maintained at a ratio at the time of the interruption, that is, in a state in which the control object value is substantially reached.

According to a conventional structure, as indicated with two-dot and dash line in FIG. 5, integration is continued until the control object value is changed even if the control value is the upper limit value and above, the integration value adopts a large value. In this case, even if the integration value is increased, the degree of opening of the exhaust gas recirculation control value is not changed because the control value itself has reached the upper limit value.

If it is determined that the control value of the exhaust gas recirculation control valve 5 is not the upper limit value and above in step S3, whether or not the control value is the lower limit value and below is determined in step S4 and if it is that value and below, the procedure proceeds to step S3 (cancellation of integration and holding of the integration value) and otherwise, the integration is continued (step S5).

Assume that when integration of deviations by the integrating means 11 is interrupted, the operating condition of the engine 1 is changed, for example, to a high load operating condition by acceleration so that the engine output increases and thus the control object value is changed to for example 0 in order to reduce the recirculation amount of exhaust gas. In this case, because the interruption of the integration of deviations is carried out when the control value is the upper limit value and above, if the control object value is changed to be a smaller value with the integration interrupted, the recirculation ratio is raised above the control object value because the recirculation ratio is substantially the same as before the control object value is changed (it is determined that "Yes" in step S11). Thus, a deviation obtained by subtracting the recirculation ratio at this time from the control object value is a negative value (it is determined that "Yes" in step S12).

Because the deviation turns to be a negative value if the control object value is changed while the control value of the exhaust gas recirculation control valve 5 is kept the upper limit value and above while the integration is interrupted, the comparing means 13 instructs the integrating means 11 to start the integration action (step S13). In this case, an initial value when the integration action is restarted is the integration value held when the integrating means 11 interrupts the integration. Then, because the deviation is a negative value, an integration value outputted by the integrating means 11 after the integration action is restarted is a value obtained by subtracting an integration value corresponding to the deviation from the integration value when the integration is interrupted.

Thus, the control value of the exhaust gas recirculation control valve 5 decreases from the upper limit value so that the exhaust gas recirculation control valve 5 is controlled and closed until the recirculation ratio reaches the control object value (period P3 in FIG. 3). As a result, the recirculation ratio of exhaust gas decreases corresponding to the opening degree of the exhaust gas recirculation control valve 5 so that it is approximated to the control object value. On the other hand, if it is determined in step 11 that the integration is interrupted and that the control value is not the upper limit value and above, whether or not the control value is the lower limit value and below while the integration is interrupted is determined (step S14) and if a determination result is NO, the integration is continued because this is a state in which the integration is not interrupted (step S15).

If the control value of the exhaust gas recirculation control valve 5 is the lower limit value and below ("Yes" in step S4) after the integrating means 11 restarts integration of the deviations, the integration of the deviation by the integrating means 11 is interrupted like a case where it is the upper limit value and above, and a final integration value at that time is held (step S3, period P4 in FIG. 5).

Because if the control object value is changed again, the recirculation ratio maintains a value when the integration is interrupted, the determination result is "Yes" in step S14 and a deviation obtained by subtracting a recirculation ratio from the control object value is a positive value ("Yes" in step. S16), so that the integration is restarted (period P5 in FIG. 5). Because the deviation is a positive value in this case, the integration value increases so that the control value is controlled into a direction, which allows it to increase. As a consequence, the exhaust gas recirculation control valve 5 is opened so that the recirculation ratio is a control object value and exhaust gas recirculated to the intake air system 2 increases thereby increasing the recirculation ratio. In the meantime, even if the control object value is changed with the integration interrupted, if the deviation is not a positive value when the control value is the upper limit value and above and if the deviation is not a negative value when the control value is the lower limit value and below, integration interruption condition is continued (step S17).

Thus, when the control object value is changed, the integration value can be reflected on the control value of the exhaust gas recirculation control valve 5 rapidly and the recirculation ratio of exhaust gas can be controlled to the control object value more quickly as compared with a conventional example shown with a dot and dash line of FIG. 5. As a result, even if the operating condition changes and the control object value is changed, the engine 1 can be kept in a desired operating condition with combustion maintained in an excellent condition thereby preventing an increase in the discharge amount of NOx due to delay of control of the exhaust gas recirculation control valve 5 securely.

Likewise, if the control object value is changed to a higher value than the control object value when the control value of the exhaust gas recirculation control valve 5 is kept the lower limit value and below, a deviation between the control object value and the recirculation ratio turns to be a positive value so that the integration turns to addition processing. In this case also, because the integration value is held at a time when the integration is interrupted as described above, the integration is restarted from a lower integration value than in case where the integration is executed until the control object value is changed without interrupting the integration. Thus, when the control object value is changed, the integration value can be reflected on the control value of the exhaust gas recirculation control valve 5 quickly so that the recirculation ratio of actual exhaust gas can be controlled to the control object value quickly.

In the meantime, the present invention is not restricted to the above-described embodiments.

Additionally, specific compositions of respective portions are not restricted to the above-described embodiments but may be modified in various ways within a scope not departing from the spirit of the present invention.

A control apparatus for internal combustion engine for controlling components of the internal combustion engine as a control object using mathematical model of control object system including the components, comprises integrating means for integrating a deviation obtained by subtracting a control result value as a result of controlling a component with a control value from a control object value relating to control of the component, and control value control means that controls the control value of the component based on an integration value from the integrating means and quantity of state obtained from the mathematical model, wherein the integrating means interrupts integration of the deviation if the control value of the component is an upper limit value and above or a lower limit value and below and if the control object value relating to control of the component changes while the integration is interrupted and the deviation turns to a negative value while the control value of the component is kept the upper limit value and above or the deviation turns to a positive value while the control value of the component is kept the lower limit value and below, the integration is restarted from an integration value at the time of the interruption.

**Claims**

1. A control apparatus for internal combustion engine for controlling components of the internal combustion engine (1) as a control object using mathematical model of control object system including the components, comprising:

   integrating means (11) for integrating a deviation obtained by subtracting a control result value as a result of controlling a component with a control value from a control object value relating to control of the component, control value control means (12) that controls the control value of the component based on an integration value from the integrating means (11) and quantity of state obtained from the mathematical model, a stabilizing portion (12b) that controls the control value of the component so that an assessment function of the quantity of state obtained from the mathematical model is minimized; an object value optimizing portion (12c) that controls the control value of the component by optimizing the control object value relating to control of the component based on a transmission function of the mathematical model; a follow-up delay offsetting portion (12d) that controls the control value of the component according to a follow-up delay value based on the quantity of state of the mathematical model for offsetting an integration value from the integrating means; and a modeling error offsetting portion (12e) that controls the control value according to a modeling error offsetting value obtained by minimizing the assessment function based on a deviation between the follow-up delay value from the follow-up delay offsetting portion (12d) and the integration value,

   wherein the integrating means (11) interrupts integration of the deviation if the control value of the component is an upper limit value and above or a lower limit value and below and if the control object value relating to control of the component changes while the integration is interrupted and the deviation turns to a negative value while the control value of the component is kept the upper limit value and above or the deviation turns to a positive value while the control value of the component is kept the lower limit value and below, the integration is restarted from an integration value at the time of the interruption.

2. The control apparatus for internal combustion engine according to claim 1 wherein the control value control means (12) further comprises an observer (12a) that estimates the control amount of the component from the quantity of state obtained from the mathematical model and feeds back an estimated control amount to the stabilizing portion (12b) and the follow-up delay offsetting portion (12d).

3. The control apparatus for internal combustion engine according to claim 2 further comprising:

   comparing means (13) that compares the set upper limit value and lower limit value with the control value of the component, and if the control value turns the upper limit value and above or the lower limit value and below, makes the integrating means (11) to interrupt integration and if the control object value relating to control of the component changes while the integration is interrupted so that the deviation turns to be a negative value while the control value of the component is kept the upper limit value and above or the deviation turns to a positive value while the control value of the component is kept the lower limit value and below, makes the integrating means (11) to restart the integration from an integration value at the time of the interruption.

4. The control apparatus for internal combustion engine according to claim 1, 2 or 3 wherein the component is a recirculation control valve (5) provided in an exhaust gas recirculation pipe (4) that communicates exhaust system with intake system (2) and the control result value is exhaust gas recirculation ratio.

**Patentansprüche**

1. Regelvorrichtung für eine Brennkraftmaschine zur Regelung von Komponenten der Brennkraftmaschine (1) als Regelglieder einer Regelstrecke unter Verwendung eines mathematischen Modells eines die Komponenten umfassenden Regelsystems, mit

einer Integriereinrichtung (11) zur Integration einer Abweichung, die durch Subtraktion eines als Ergebnis der Regelung einer Komponente mit einem Regelwert erhaltenen Regelungsergebniswertes von einem die Regelung der Komponente betreffenden Regelsollwert erhalten wird,

einer Regelwert-Steuereinrichtung (12), die den Regelwert der Komponente auf der Basis eines von der Integriereinrichtung (11) erhaltenen Integrationswertes und einer von dem mathematischen Modell erhaltenen Zustandsgröße steuert,

einem Stabilisierungsglied (12b), das den Regelwert der Komponente derart steuert, dass eine Bewertungsfunktion der von dem mathematischen Modell erhaltenen Zustandsgröße minimiert wird,

einem Sollwert-Optimierungsglied (12c), das den Regelwert der Komponente durch eine auf der Basis einer Übertragungsfunktion des mathematischen Modells erfolgende Optimierung des die Regelung der Komponente betreffenden Regelsollwertes steuert,

einem Nachlaufverzögerungs-Kompensationsglied (12d), das den Regelwert der Komponente gemäß einem auf der Zustandsgröße des mathematischen Modells basierenden Nachlaufverzögerungswert zur Kompensation des von der Integriereinrichtung erhaltenen Integrationswertes steuert, und

einem Modellfehler-Kompensationsglied (12e), das den Regelwert gemäß einem Modellfehler-Kompensationswert steuert, der durch Minimierung der Bewertungsfunktion auf der Basis einer Abweichung zwischen dem von dem Nachlaufverzögerungs-Kompensationsglied (12d) erhaltenen Nachlaufverzögerungswert und dem Integrationswert erhalten wird, wobei

die Integriereinrichtung (11) die Integration der Abweichung unterbricht, wenn der Regelwert der Komponente einem oberen Grenzwert entspricht und darüber liegt oder einem unteren Grenzwert entspricht und darunter liegt, und die Integration ausgehend von dem zum Zeitpunkt der Unterbrechung vorliegenden Integrationswert wieder aufnimmt, wenn sich der die Regelung der Komponente betreffende Regelsollwert während der Unterbrechung der Integration ändert und die Abweichung bei auf dem oberen Grenzwert und darüber gehaltenem Regelwert der Komponente einen negativen Wert oder bei auf dem unteren Grenzwert und darunter gehaltenem Regelwert der Komponente einen positiven Wert annimmt.

2.  Regelvorrichtung für eine Brennkraftmaschine nach Anspruch 1, bei der die Regelwert-Steuereinrichtung (12) ein Überwachungsglied (12a) umfasst, das einen Regelbetrag der Komponente auf der Basis der von dem mathematischen Modell erhaltenen Zustandsgröße schätzt und den geschätzten Regelbetrag zu dem Stabilisierungsglied (12b) und dem Nachlaufverzögerungs-Kompensationsglied (12d) rückkoppelt.

3.  Regelvorrichtung für eine Brennkraftmaschine nach Anspruch 2, mit einer Vergleichseinrichtung (13), die den eingestellten oberen Grenzwert und unteren Grenzwert mit dem Regelwert der Komponente vergleicht und bei Übergang des Regelwertes auf den oberen Grenzwert und darüber oder auf den unteren Grenzwert und darunter eine Unterbrechung der Integration durch die Integriereinrichtung (11) herbeiführt sowie eine Wiederaufnahme der Integration durch die Integriereinrichtung (11) ausgehend von dem zum Zeitpunkt der Unterbrechung vorliegenden Integrationswert herbeiführt, wenn sich der die Regelung der Komponente betreffende Regelsollwert während der Unterbrechung der Integration derart ändert, dass die Abweichung bei auf dem oberen Grenzwert und darüber gehaltenem Regelwert der Komponente einen negativen Wert oder bei auf dem unteren Grenzwert und darunter gehaltenem Regelwert der Komponente einen positiven Wert annimmt.

4.  Regelvorrichtung für eine Brennkraftmaschine nach Anspruch 1, 2 oder 3, bei der die Komponente ein in einer ein Abgassystem mit einem Ansaugsystem (2) verbindenden Abgas-Rückführleitung (4) angeordnetes Rückführungsregelventil (5) ist und der Regelungsergebniswert ein Abgas-Rückführverhältnis darstellt.

**Revendications**

1.  Dispositif de commande pour un moteur à combustion interne visant à commander des composants du moteur à combustion interne (1) comme un objet de commande en utilisant un modèle mathématique d'un système d'objet de commande incluant les composants, comprenant:

    un moyen d'intégration (11) pour intégrer une déviation obtenue en soustrayant une valeur de résultat de commande comme un résultat de la commande d'un composant d'une valeur de commande d'une valeur d'objet de commande se rapportant à une commande du composant,
    un moyen de régulation de valeur de commande (12) qui régule la valeur de commande du composant sur la base d'une valeur d'intégration du moyen d'intégration (11) et une quantité d'état obtenue d'après le modèle mathématique,

une portion de stabilisation (12b) qui régule la valeur de commande du composant de sorte qu'une fonction d'évaluation de la quantité d'état obtenue d'après le modèle mathématique soit minimisée;

une portion d'optimisation de valeur d'objet (12c) qui régule la valeur de commande du composant en optimisant la valeur d'objet de commande se rapportant à une commande du composant sur la base d'une fonction de transmission du modèle mathématique;

une portion de compensation de retard de suivi (12d) qui régule la valeur de commande du composant selon une valeur de retard de suivi sur la base de la quantité d'état du modèle mathématique pour compenser une valeur d'intégration du moyen d'intégration; et

une portion de compensation d'erreur de modélisation (12e) qui régule la valeur de commande selon une valeur de compensation d'erreur de modélisation obtenue en minimisant la fonction d'évaluation sur la base d'une déviation entre la valeur de retard de suivi de la portion de compensation de retard de suivi (12d) et la valeur d'intégration,

où le moyen d'intégration (11) interrompt l'intégration de la déviation si la valeur de commande du composant est une valeur limite supérieure et plus ou une valeur limite inférieure et moins et si la valeur d'objet de commande se rapportant à une commande du composant change alors que l'intégration est interrompue et la déviation passe à une valeur négative alors que la valeur de commande du composant est maintenue à la valeur limite supérieure et plus ou la déviation passe à une valeur positive alors que la valeur de commande du composant est maintenue à la valeur limite inférieure et moins, l'intégration est redémarrée à partir d'une valeur d'intégration au moment de l'interruption.

2. Dispositif de commande pour un moteur à combustion interne selon la revendication 1 dans lequel le moyen de régulation de valeur de commande (12) comprend en plus un dispositif d'observation (12a) qui estime la grandeur de commande du composant d'après la quantité d'état obtenue d'après le modèle mathématique et réintroduit une grandeur de commande estimée à la portion de stabilisation (12b) et la portion de compensation de retard de suivi (12d).

3. Dispositif de commande pour un moteur à combustion interne selon la revendication 2 comprenant en plus:

un moyen de comparaison (13) qui compare la valeur limite supérieure et la valeur limite inférieure établies avec la valeur de commande du composant, et si la valeur de commande passe à la valeur limite supérieure et plus ou la valeur limite inférieure et moins, amène le moyen d'intégration (11) à interrompre l'intégration et si la valeur d'objet de commande se rapportant à une commande du composant change alors que l'intégration est interrompue de sorte que la déviation s'avère être une valeur négative alors que la valeur de commande du composant est maintenue à la valeur limite supérieure et plus ou la déviation passe à une valeur positive alors que la valeur de commande du composant est maintenue à la valeur limite inférieure et moins, amène le moyen d'intégration (11) à redémarrer l'intégration à partir d'une valeur d'intégration au moment de l'interruption.

4. Dispositif de commande pour un moteur à combustion interne selon la revendication 1, 2 ou 3 dans lequel le composant est une soupape de commande de recirculation (5) pourvue dans un tuyau de recirculation de gaz d'échappement (4) qui relie un système d'échappement à un système d'admission (2) et la valeur de résultat de commande est un rapport de recirculation de gaz d'échappement.

## Fig.1

Fig.2

# Fig.3

```
                    ┌──────────────┐
                    │    start     │
                    └──────┬───────┘
                           │
                           ▼                S1
                    ┌──────────────────┐
                    │ integrate the    │
                    │ deviation        │
                    └──────┬───────────┘
                           │
                           ▼                S2
                    ╱──────────────────╲        Yes
                   ╱ control value ≧      ╲─────────────┐
                   ╲ upper limit value?   ╱              │
                    ╲──────────────────╱                │
                           │ No                          │
                           ▼                S4            │
                    ╱──────────────────╲        Yes      │
                   ╱ control value ≦      ╲──────────┐   │
                   ╲ lower limit value?   ╱          │   │
                    ╲──────────────────╱             │   │
                           │ No        S5            ▼       S3
                           ▼                  ┌──────────────────────┐
                    ┌──────────────────┐      │ interrupt the        │
                    │ continue the     │      │ integration          │
                    │ integration      │      │ to hold the          │
                    └──────┬───────────┘      │ integration value    │
                           │                  └──────────┬───────────┘
                           │◄────────────────────────────┘
                           ▼
                    ┌──────────────┐
                    │     end      │
                    └──────────────┘
```

# Fig.4

```
                              ( start )
                                  |
                                  v
                                                            S11
         No          during the interruption of the integration
       <----------   and control value ≧ upper limit value?
       |                              |
       v                            Yes
  S14  |                              |
       |                              v
  No   during the interruption of the integration          S12
 <---- and control value ≦ lower limit value?
 |                   |                        No
 |                 Yes                 deviation < 0?  ----------->  (1)
 |                   |         S16            |                        |
 |                   v                      Yes                        |
 |     No                                    |                         |
 |   <----  deviation > 0?                    |                        |
 |   |                    |                   |                   S17  |
 |   v                  Yes                   |                        v
 |  (1)                   |                   |              continue the interruption
 |                        |                   v                   of integration
 |                        |         S13                                |
 |                        |          |                                 |
 |                        |          v                                 |
 |                        +---->  restart the integration              |
 |  S15                                      |                         |
 |   |                                       |                         |
 |   v                                       |                         |
 +-->  continue the integration              |                         |
              |                              |                         |
              |                              v <-----------------------+
              +----------------------->      |
                                             v
                                         ( end )
```

# Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10299580 A
- JP 2000291493 A
- JP 2001214731 A
- US 4219000 A
- DE 19846447 A1